# EUROPÄISCHE PATENTANMELDUNG

(11) **EP 1 785 636 A2**
(43) Veröffentlichungstag der Anmeldung: **16.05.2007**
(21) Anmeldenummer: 06021789.0
(22) Anmeldetag: 18.10.2006
(51) Int. Cl.: F16B 39/24

(54) **Schraubensicherung**

(30) Priorität: 15.11.2005 DE 102005054471
(71) Anmelder: ThyssenKrupp Bilstein Suspension GmbH, 58256 Ennepetal (DE)
(72) Erfinder: Weimann, Claus, Dipl.-Ing., 58300 Wetter (DE); Schmidt, Norbert, Dipl.- Ing., 65391 Lorch (DE)
(74) Vertreter: Adams, Steffen

(57) **Zusammenfassung**

Schraubensicherung für eine einen Gewindezapfen (2), eine Mutter (4), eine erste Sicherungsscheibe (8) und mindestens eine zweite Sicherungsscheibe (7",9) umfassende Schraubverbindung, wobei die erste Sicherungsscheibe (8) mit der Mutter (4) verdrehfest verbunden ist, wobei die erste Sicherungsscheibe (8) eine erste Profilierung (18) auf einer ersten Oberfläche und die zweite Sicherungsscheibe (7",9) eine zweite Profilierung (17) auf einer zweiten Oberfläche aufweist, und wobei die Profilierung der ersten Sicherungsscheibe (8) mit der der zweiten Sicherungsscheibe (7",9) derart im Eingriff steht, dass eine Relativverdrehung der beiden Sicherungsscheiben zueinander nur in eine Verdrehrichtung ausführbar ist, die zu einer Erhöhung der Spannkraft der Schraubverbindung führt, wobei zwischen der zweiten Sicherungsscheibe und dem Gewindezapfen eine formschlüssige Verdrehsicherung vorgesehen ist.

## Beschreibung

Die Erfindung betrifft eine Schraubensicherung für eine einen Gewindezapfen, eine Mutter, eine erste Sicherungsscheibe und mindestens eine zweite Sicherungsscheibe umfassende Schraubverbindung, wobei die erste Sicherungsscheibe mit der Mutter verdrehfest verbunden ist, wobei die erste Sicherungsscheibe eine erste Profilierung auf einer ersten Oberfläche und die zweite Sicherungsscheibe eine zweite Profilierung auf einer zweiten Oberfläche aufweist, und wobei die Profilierung der ersten Sicherungsscheibe mit der der zweiten Sicherungsscheibe derart im Eingriff steht, dass eine Relativverdrehung der beiden Sicherungsscheiben zueinander nur in eine Verdrehrichtung ausführbar ist, die zu einer Erhöhung der Spannkraft der Schraubverbindung führt.

Durch die DE-U 83 02 613 ist eine Schrauben- und Mutternsicherung bekannt geworden, bestehend aus einem ersten Sicherungsring, der an seiner einen Seite eine aufgeraute Reibfläche bzw. eingeprägte Radialrippen und an seiner anderen Seite mehrere, in Umfangsrichtung flach ansteigende Keilflächen mit dazwischen liegenden Stirnflächen aufweist und aus einem zu sichernden Teil in Form eines gleichartigen zweiten Sicherungsringes eines Schraubenkopfes oder einer Mutter, welcher an seiner dem ersten Sicherungsring zugekehrten Seite mit gleichartigen Keilflächen versehen ist, die entgegengesetzt zu den Keilflächen des ersten Sicherungsringes ansteigen und sich an diesen abstützen.

Ähnlich ausgebildete Schrauben- und Mutternsicherungen sind der US-A 3,263,727 sowie der US-A 4,134,438 zu entnehmen.

Durch die Steigung der Keile, die größer ist als die Gewindesteigung des Zapfens, wird eine Selbsthemmung der Verbindung erreicht. Diese bekannte Vorrichtung hat jedoch die Einschränkung, dass sie nicht auf unbefestigten Beilagscheiben eingesetzt werden kann, da sich das gesamte System mit den Sicherungsringen in der Trennebene der Beilagscheibe radial verdrehen kann, zumal hier nur die Reibung in Verbindung mit der Klemmkraft wirkt.

Der Erfindung liegt die Aufgabe zugrunde, das im Stand der Technik beschriebene Sicherungssystem so weiterzuentwickeln, dass es auch auf unbefestigten Beilagscheiben einsetzbar ist. Hierbei muss gewährleistet werden, dass sich die Schraubverbindung nicht löst und die benötigte Vorspannkraft der Schraubverbindung über die Lebensdauer des jeweils zum Einsatz gelangenden Bauteils erhalten bleibt.

Diese Aufgabe wird dadurch gelöst, dass zwischen der zweiten Sicherungsscheibe und dem Gewindezapfen eine formschlüssige Verdrehsicherung vorgesehen ist.

Vorteilhafte Weiterbildungen des Erfindungsgegenstandes sind den Unteransprüchen zu entnehmen.

Die erfindungsgemäße Schraubensicherung ist allgemein anwendbar für alle Schraubverbindungen, die ein oder mehrere Teile enthalten, die einen Bewegungsfreiheitgrad in Drehrichtung um die Schrauben- oder Zapfenachse besitzen.

Infolge der formschlüssigen Verdrehsicherung wird die axiale Vorspannung der Schraubensicherung nicht behindert, jedoch eine Übertragung von radialen Lösemomenten der ungesicherten Scheiben auf die Mutter verhindert.

So können beispielsweise miteinander zu verbindende Platten oder dergleichen über eine mit einem Zapfen versehene Schraube in Zusammenwirken mit der erfindungsgemäßen Schraubensicherung problemlos miteinander verbunden werden, ohne dass sich die Schraubverbindung löst. Die benötigte Vorspannkraft der Schraubverbindung steht dabei stets zur Verfügung.

Im Speziellen kann der Erfindungsgegenstand auch zur Befestigung und Vorspannung beispielsweise eines eine Ventilbaugruppe beinhaltenden Kolbens und Beilagscheiben auf einem Kolbenstangenzapfen eines Stoßdämpfers eingesetzt werden. Hierbei kann alternativ die Möglichkeit gegeben sein, anstelle einer Mutter ein Gehäuse mit Zusatzfunktionalität, wie z.B. einer amplitudenselektiven Dämpfungseinrichtung, und einem damit in Wirkverbindung stehenden Schraubanschluss zu verwenden. Über die formschlüssige Verbindung zwischen der betreffenden Scheibe und dem Zapfen, respektive bei einem Stoßdämpfer dem Kolbenstangenzapfen, wird eine Verdrehung der Bauteile relativ zueinander verhindert. Bedarfsweise darunter liegende Beilagscheiben dürfen sich im Betrieb verdrehen, da von ihnen kein Lösemoment auf die Schraubenmutter mehr ausgeübt ist.

Es kann - je nach Ausführungsform der Schraubensicherung - von Vorteil sein, wenn die erste Sicherungsscheibe als von der Mutter getrenntes Bauteil ausgebildet ist. Dann muss zwischen der Mutter und der ersten Sicherungsscheibe eine verdrehfeste formschlüssige Verbindung vorgesehen sein, da sich die Mutter sonst durch Schwingungsanregung, insbesondere hochfrequente Schwingungsanregung, lösen kann.

Ebenfalls denkbar ist, dass die formschlüssige Verbindung durch ein auf der der Mutter zugewandten Oberfläche der ersten Sicherungsscheibe ausgebildetes Verdrehsicherungsprofil bewirkt wird, welches in ein entsprechendes Profil auf der der Sicherungsscheibe zugewandten Oberfläche der Mutter eingreift.

Weiterhin denkbar ist, dass die formschlüssige Verbindung durch ein auf der der Mutter zugewandten Oberfläche der ersten Sicherungsscheibe ausgebildetes Verdrehsicherungsprofil (z.B. Radialrippen) bewirkt wird, welches sich beim Anziehen der Schraubenverbindung in die Oberfläche der Mutter eindrückt, sodass die formschlüssige Verdrehsicherung entsteht.

Aus Kostengründen wird der Fachmann derjenigen Ausführungsform, bei der das Verdrehsicherungsprofil an der ersten Sicherungsscheibe vorgesehen ist, folgen, da hier der geringste Bearbeitungsaufwand gegeben ist.

Zur Erreichung der Vorspannkraft, die auf die Beilagscheibe(n) wirken muss, darf die formschlüssige Verbindung bei einer gewählten Ausführungsform zwischen der unteren Scheibe des Sicherungssystems und dem Zapfen nur die Relativbewegung in Verdrehrichtung um die Zapfenachse verhindern und muss eine zur Zapfenachse axiale Verschiebung zulassen, die ein Anpressen der Scheibe auf die Beilagscheibe(n) zulässt.

Mindestens eine der Scheiben ist zur Erzeugung der formschlüssigen Verbindung mit mindestens einem radial nach innen weisenden nasenartigen Radialansatz versehen, der mit einer Längsnut beispielsweise im Kolbenstangenzapfen im Eingriff steht. Alternativ können auch mehrere Nasen und Längsnuten vorgesehen werden.

Gemäß einer ersten konkreten Ausführungsform sind bei der erfindungsgemäßen Schraubensicherung zwei Sicherungsscheiben vorgesehen, und die formschlüssige Verdrehsicherung ist durch mindestens einen an der zweiten Sicherungsscheibe ausgebildeten Radialansatz gebildet ist, der in eine in dem Gewindezapfen ausgebildete Längsnut eingreift, wobei eine benachbart zu der zweiten Sicherungsscheibe angeordnete Beilagscheibe zur Abstützung weiterer Beilagscheiben vorgesehen ist.

Eine zweite Ausführungsform der erfindungsgemäßen Schraubensicherung unterscheidet sich von der ersten Ausführungsform dadurch, dass die zweite Sicherungsscheibe (anstelle der im ersten Ausführungsbeispiel benachbart zu dieser angeordneten Beilagscheibe) die Funktion der Abstützung der weiteren Beilagscheiben übernimmt. Hierzu ist die zweite Sicherungsscheibe so ausgebildet, dass sie die Abstützfunktion für weitere Beilagscheiben erfüllt, d.h. eine ausreichende, sich in radialer Richtung erstreckende Anlagefläche für die weiteren Beilagscheiben aufweist. Bei diesem Ausführungsbeispiel entfällt im Vergleich zu dem ersten Ausführungsbeispiel die benachbart zu der zweiten Sicherungsscheibe angeordnete Beilagscheibe und es wird somit axiale Bauhöhe eingespart.

Gemäß einer dritten Ausführungsform der erfindungsgemäßen Schraubensicherung sind zwei Sicherungsscheiben und eine Beilagscheibe vorgesehen, wobei die Beilagscheibe mindestens einen Radialansatz aufweist, der zur Bildung der formschlüssigen Verdrehsicherung in eine in dem Gewindezapfen ausgebildete Längsnut eingreift, wobei zwischen der zweiten Sicherungsscheibe und der Beilagscheibe eine Verdrehsicherung, insbesondere eine formschlüssige Verdrehsicherung, vorgesehen ist. Bei dieser Ausführungsform besteht der Vorteil darin, dass die zweite Sicherungsscheibe keinen Radialansatz aufweist, so dass für beide Sicherungsscheiben am Markt zu günstigen Preisen erhältliche Sicherungsscheiben eingesetzt werden können, welche bereits mit den benötigten Verdrehsicherungsprofilen in Form von Radialrippen ausgestattet sind. Lediglich die Beilagscheibe muss mit dem die formschlüssige Verdrehsicherung mit dem Gewindezapfen eingehenden Radialansatz versehen sein.

Ist die formschlüssige Verdrehsicherung zwischen der zweiten Sicherungsscheibe und dem Gewindezapfen vorgesehen, sind auf der der zweiten Sicherungsscheibe zugewandten Oberfläche der an diese angrenzenden Beilagscheibe keine Profilierungen zur Verdrehsicherung mehr erforderlich, wobei diese Scheibe gleichzeitig zur Einstellung der Ventilkennlinie herangezogen werden kann. Je nach Einsatzfall können nicht profilierte Stirnflächen mit einer Scheibenkontur (plan, konkav oder dergleichen) versehen werden, wobei die Konturen eingeprägt oder geschliffen sind.

Der Erfindungsgegenstand ist anhand eines Ausführungsbeispiels in der Zeichnung dargestellt und wird wie folgt beschrieben. Es zeigen:
- Figur 1: Teilansicht eines mit einem Ventil in Wirkverbindung stehenden Kolbenstangenendes eines Stoßdämpfers samt Detailansicht der Schraubverbindung;
- Figur 2: Schnitt durch Figur 1 gemäß Linie B-B;
- Figur 3: Teildarstellung eines scheibenartigen Sicherungselementes;
- Figur 4: Prinzipskizze des Sicherungssystems gemäß Figur 1;
- Figur 5: Teilansicht der Profilierung einer der Scheiben des Sicherungssystems gemäß Figur 4
- Figur 6: Perspektivische Darstellung eines scheibenartigen Sicherungselementes.

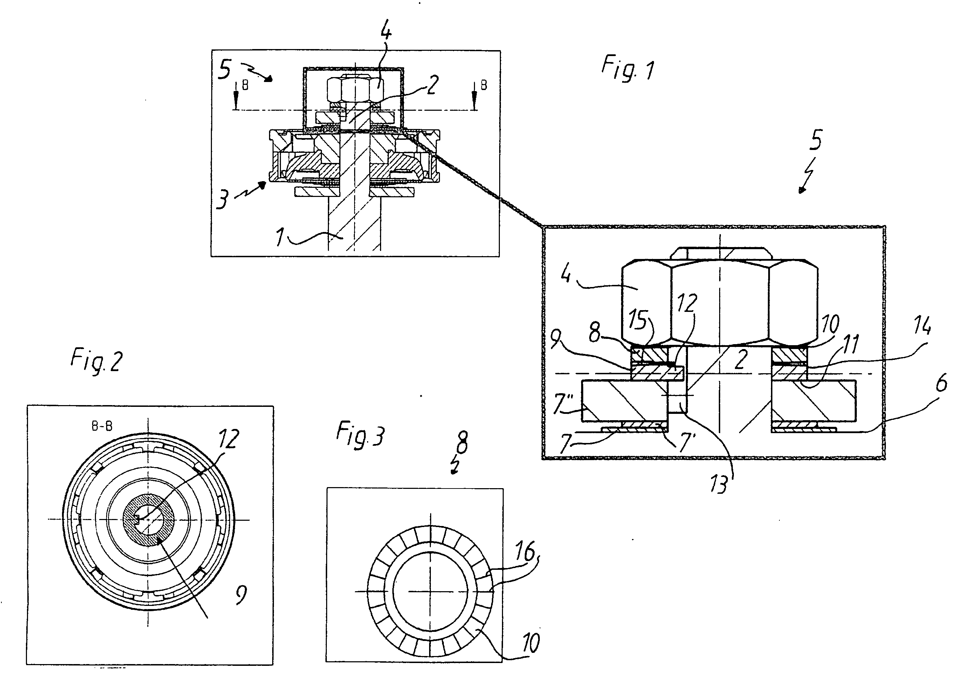

Figur 1 zeigt eine Kolbenstange 1, die endseitig in einen Zapfen 2 ausläuft, im Bereich dessen ein hier nur schematisch dargestellter Dämpfungskolben 3 positioniert ist. Der Dämpfungskolben 3 ist über eine Schraubenmutter 4, die auf den Gewindezapfen 2 aufgeschraubt ist, fest mit der Kolbenstange 1 verbunden. Der Dämpfungskolben 3 umfasst mehrere Ventilanordnungen für die Zug- und Druckstufe eines Schwingungsdämpfers. Um ein unbeabsichtigtes Lösen der Mutter 4 während des Betriebs zu vermeiden, kommt eine Schraubensicherung 5 zum Einsatz, die im rechten Bild der Figur 1 vergrößert dargestellt ist. Erkennbar sind die Schraubenmutter 4 und der Zapfen 2. Hier nicht näher dargestellt ist, dass der Zapfen 2 zumindest im Bereich der Schraubenmutter 4 mit einem Gewinde versehen ist. Auf dem oberen Gehäuseteil 6 des im vergrößerten Bild nicht weiter dargestellten Dämpfungskolbens 3 sind mehrere Beilagscheiben 7,7',7" positioniert, die unterschiedliche Dicke haben. Diese Beilagscheiben dienen in bekannter Weise zur federnden Abstützung der Ventilscheiben, und über diese Beilagscheiben wird die Dämpfungskennung in Zug- und Druckstufe des Schwingungsdämpfers eingestellt. Die unterschiedlichen Dicken sind ausschließlich dafür da, um unterschiedlichen Anwendungsfällen, z. B. zur Einstellung von Ventilkennlinien an Stoßdämpfern, bzw. unterschiedlicher geometrischer Ausgestaltung hinsichtlich der Bauhöhe des Dämpfungskolbens 3 Rechnung zu tragen.

Von wesentlicher Bedeutung ist die Gewährleistung, dass sich die Schraubenmutter 4 während des Betriebes des Schwingungsdämpfers, z.B. angeregt durch hochfrequente mechanische Schwingungen, nicht löst und dass die benötigte Vorspannkraft der Verbindung über die gesamte Dämpferlebensdauer zur Verfügung steht. Die Beilagscheiben 7,7',7" sind in diesem Beispiel nicht befestigt, sondern liegen vielmehr lose auf der ihnen zugewandten Oberfläche 6 der die Durchbrüche des Dämpfungskolbens 3 abdeckenden Ventilscheibe auf. Die erfindungsgemäße Schraubensicherung 5 wird in diesem Beispiel erzeugt durch ein erste und zweite Sicherungsscheiben 8,9 umfassendes Sicherungssystem. Die der Schraubenmutter 4 zugewandte Stirnfläche 10 der ersten Sicherungsscheibe 8 ist mit einem Verdrehsicherungsprofil (z. B. Radialrippen) versehen, das sich beim Anziehen der Verbindung in die Mutter 4 eindrückt und somit einen Formschluss zwischen der Scheibe 8 und der Schraubenmutter 4 erzeugt. Gleiches gilt für die der dickeren Beilagscheibe 7" zugewandte Stirnfläche 11 der zweiten Sicherungsscheibe 9 des Sicherungssystems.

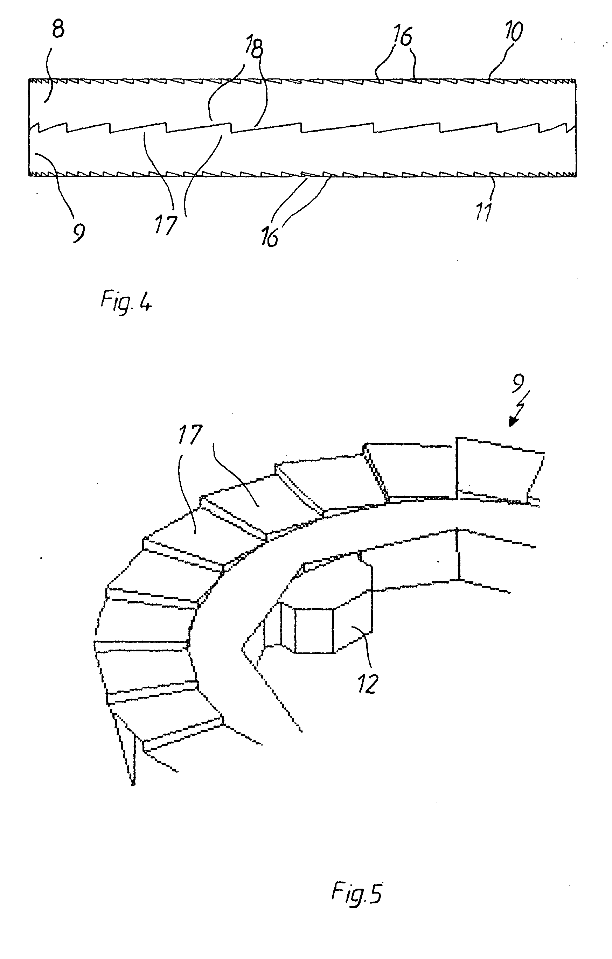

Die erfindungsgemäße Schraubensicherung 5 wird in diesem Beispiel nun erzeugt durch Herbeiführung einer formschlüssigen Verdrehsicherung zwischen der zweiten Sicherungsscheibe 9 des Sicherungssystems und dem Zapfen 2. Hierbei wird in diesem Beispiel an der zweiten Sicherungsscheibe 9 ein einzelner, nasenartig ausgebildeter Radialansatz 12 angeformt, der in einer Längsnut 13 des Zapfens 2 geführt ist. Somit ist eine Relativverdrehung der zweiten Sicherungsscheibe 9 des Sicherungssystems zum Zapfen 2 in Umfangsrichtung nicht mehr möglich. Darüber hinaus ist im Bereich der einander zugewandten Stirnflächen 14,15 der Sicherungsscheiben 8,9 eine hier nicht näher erkennbare Profilierung vorgesehen. Verwiesen wird diesbezüglich auf die Detailansichten der Figuren 4 bis 6.

Bei freier Beweglichkeit der Beilagscheiben 7,7' in Umfangsrichtung wird somit eine Entkoppelung zwischen Schraubenmutter 4 und Beilagscheibe 7' durch die formschlüssige Verbindung zwischen dem durch die Sicherungsscheiben 8,9 gebildeten Sicherungssystem und dem Zapfen 2 herbeigeführt. Somit kann sich die Schraubverbindung nicht mehr selbsttätig lösen und die benötigte Vorspannkraft der Schraubverbindung über die Dämpferlebensdauer bleibt erhalten.

Figur 2 zeigt einen Schnitt entlang der Linie B-B der Figur 1. Schraffiert dargestellt ist die zweite Sicherungsscheibe 9 des Sicherungssystems samt nasenartig ausgebildetem Radialansatz 12.

Figur 3 zeigt als Prinzipskizze die erste Sicherungsscheibe 8 des Sicherungssystems samt angedeuteten Rippen 16 (Verdrehsicherungsprofil) auf der im eingebauten Zustand der Schraubenmutter 4 zugewandten Stirnfläche 10.

Figur 4 zeigt einen Querschnitt durch die Sicherungsscheiben 8,9, wobei die Sicherungsscheibe 9 mit einem keilförmigen Profil 17 versehen ist. Die Sicherungsscheibe 8 weist im Bereich ihrer Stirnfläche 15 ebenfalls ein keilförmiges Profil 18 auf, das im Einbauzustand in das Profil 17 der Sicherungsscheibe 9 eingreift. Durch die Steigung der keilförmige Verzahnungen bildenden Profile 17,18, die größer ist als die Gewindesteigung des Zapfens 2, wird eine Selbsthemmung des Sicherungssystems erreicht. Die Stirnflächen 10,11 der Sicherungsscheiben 8,9 sind, wie auch in Figur 3 dargestellt, mit Radialrippen 16 als Verdrehsicherungsprofil versehen. Es ist darauf hinzuweisen, dass bei dem in den Zeichnungen dargestellten Ausführungsbeispiel der Erfindung das in Fig. 4 dargestellte Verdrehsicherungsprofil 16 an der zweiten Sicherungsscheibe 9 entbehrlich ist, weil die zweite Sicherungsscheibe 9 durch den Radialsatz 12, der in die Nut 13 des Zapfens 2 eingreift, gegen Verdrehung gesichert ist. Die Scheiben 7,7',7" können sich daher drehen, ohne dass ein Lösemoment auf die Mutter 4 übertragen wird.

Figur 5 zeigt als Prinzipskizze eine Teilansicht der zweiten Sicherungsscheibe 9. Erkennbar ist das mit der entsprechenden Steigung versehene Profil 17 sowie der nasenartig ausgebildete Radialansatz 12. Wie in Figur 4 veranschaulicht, greift das keilförmige Profil 18 in das Profil 17 der Sicherungsscheibe 9 ein, sodass die bereits angesprochene Selbsthemmung der Verbindung erreicht wird. Infolge der formschlüssigen Verdrehsicherung zwischen der Sicherungsscheibe 9 und dem Zapfen 2 über den in der Längsnut 13 des Zapfens 2 geführten Radialansatzes 12 ist bei angezogener Schraubenmutter 4 nun eine Übertragung eines die Mutter 4 lösenden Drehmoments auf die Mutter 4 nicht mehr möglich.

Alternativ, jedoch hier nicht dargestellt, kann beispielsweise auch die unmittelbar an die zweite Sicherungsscheibe 9 angrenzende Beilagscheibe 7" mit einem in die Längsnut 13 eingreifenden, nasenartig ausgebildeten Radialansatz versehen werden, wobei dann ein entsprechendes Verdrehsicherungsprofil zwischen der Beilagscheibe 7" und der Sicherungsscheibe 9 vorgesehen sein muss, das beim Anziehen der Schraubenverbindung einen Formschluss zwischen beiden Scheiben 7", 9 herstellt (z. B. durch Radialrippen).

Ebenfalls denkbar, jedoch nicht dargestellt, ist, dass die Beilagscheibe 7" die zweite Sicherungsscheibe 9 des Sicherungssystems ersetzt und somit selber Teil des Sicherungssystems wird. Durch diese Maßnahme entfällt die im Ausführungsbeispiel der Zeichnung dargestellte zweite Sicherungsscheibe 9 und es kann die Bauhöhe des Gesamtsystems vorteilhaft reduziert werden.

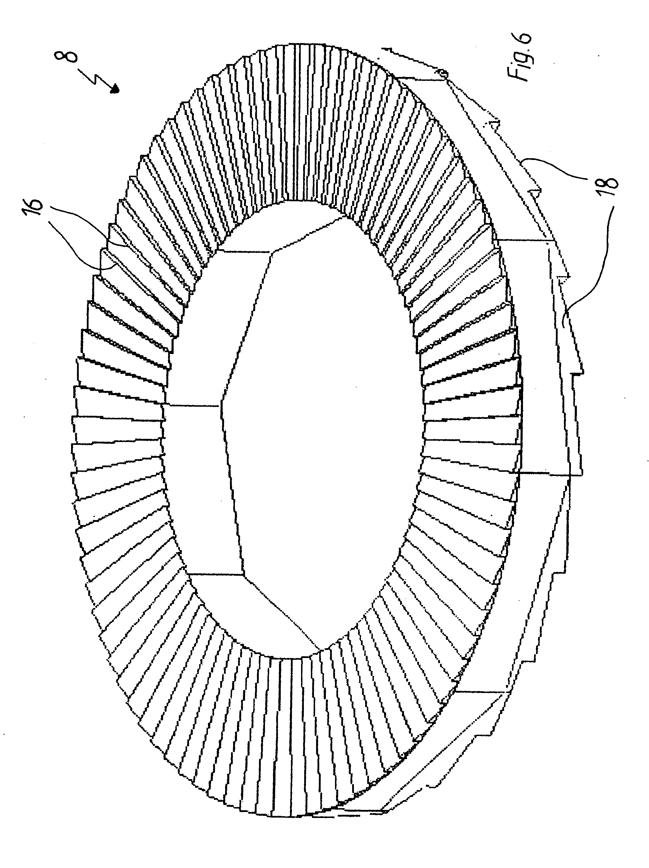

Figur 6 zeigt beispielhaft die erste Sicherungsscheibe 8 des Sicherungssystems, die nicht mit einem Radialansatz (siehe Figur 5) versehen ist. Erkennbar ist das als Verzahnung ausgebildete Profil 18 sowie das rippenförmige Verdrehsicherungsprofil 16.

### Bezugszeichenliste

- 1: Kolbenstange
- 2: Zapfen
- 3: Dämpfungskolben
- 4: Schraubenmutter
- 5: Schraubensicherung
- 6: oberer Gehäuseteil
- 7: Beilagscheibe
- 7': Beilagscheibe
- 7": Beilagscheibe
- 8: erste Sicherungsscheibe
- 9: zweite Sicherungsscheibe
- 10: obere Stirnfläche
- 11: untere Stirnfläche
- 12: Radialansatz
- 13: Längsnut
- 14: Stirnfläche
- 15: Stirnfläche
- 16: Verdrehsicherungsprofil (Rippen)
- 17: keilförmiges Profil (Verzahnung)
- 18: keilförmiges Profil (Verzahnung)

## Patentansprüche

1. Schraubensicherung für eine einen Gewindezapfen (2), eine Mutter (4), eine erste Sicherungsscheibe (8) und mindestens eine zweite Sicherungsscheibe (7"; 9) umfassende Schraubverbindung, wobei die erste Sicherungsscheibe (8) mit der Mutter (4) verdrehfest verbunden ist, wobei die erste Sicherungsscheibe (8) eine erste Profilierung (18) auf einer ersten Oberfläche und die zweite Sicherungsscheibe (7"; 9) eine zweite Profilierung (17) auf einer zweiten Oberfläche aufweist, und wobei die Profilierung der ersten Sicherungsscheibe (8) mit der der zweiten Sicherungsscheibe (7"; 9) derart im Eingriff steht, dass eine Relativverdrehung der beiden Sicherungsscheiben (8, 7"; 8, 9) zueinander nur in eine Verdrehrichtung ausführbar ist, die zu einer Erhöhung der Spannkraft der Schraubverbindung führt, **dadurch gekennzeichnet, dass** zwischen der zweiten Sicherungsscheibe (7"; 9) und dem Gewindezapfen (2) eine formschlüssige Verdrehsicherung vorgesehen ist.

2. Schraubensicherung nach Anspruch 1, **dadurch gekennzeichnet, dass** die erste Sicherungsscheibe (8) einteilig mit der Mutter (4) ausgebildet ist.

3. Schraubensicherung nach Anspruch 1, **dadurch gekennzeichnet, dass** die erste Sicherungsscheibe (8) als von der Mutter (4) getrenntes Bauteil ausgebildet ist, und dass zwischen der Mutter (4) und der ersten Sicherungsscheibe (8) eine verdrehfeste formschlüssige Verbindung vorgesehen ist.

4. Schraubensicherung nach Anspruch 3, **dadurch gekennzeichnet, dass** die formschlüssige Verbindung durch ein auf der der Mutter (4) zugewandten Oberfläche der ersten Sicherungsscheibe (8) ausgebildetes Verdrehsicherungsprofil (16) bewirkt wird, welches in ein entsprechendes Profil auf der der Sicherungsscheibe (8) zugewandten Oberfläche der Mutter (4) eingreift.

5. Schraubensicherung nach einem der Ansprüche 1 bis 4, **dadurch gekennzeichnet, dass** zwei Sicherungsscheiben (8, 9) vorgesehen sind und die formschlüssige Verdrehsicherung durch mindestens einen an der zweiten Sicherungsscheibe (9) ausgebildeten Radialansatz (12) gebildet ist, der in eine in dem Gewindezapfen (2) ausgebildete Längsnut (13) eingreift, und dass eine benachbart zu der zweiten Sicherungsscheibe (9) angeordnete Beilagscheibe (7") zur Abstützung weiterer Beilagscheiben (7, 7') vorgesehen sind.

6. Schraubensicherung nach den Ansprüchen 1 bis 4, **dadurch gekennzeichnet, dass** zwei Sicherungsscheiben (8, 9) vorgesehen sind und die formschlüssige Verdrehsicherung durch mindestens einen an der zweiten Sicherungsscheibe (9) ausgebildeten Radialansatz (12) gebildet ist, der in eine in dem Gewindezapfen (2) ausgebildete Längsnut (13) eingreift, und dass die zweite Sicherungsscheibe (9) so ausgebildet ist, dass sie eine Abstützfunktion für weitere Beilagscheiben (7, 7') erfüllt.

7. Schraubensicherung nach den Ansprüchen 1 bis 4, **dadurch gekennzeichnet, dass** zwei Sicherungsscheiben (8, 9) und eine Beilagscheibe (7") vorgesehen sind, wobei die Beilagscheibe (7") mindestens einen Radialansatz (12) aufweist, der zur Bildung der formschlüssigen Verdrehsicherung in eine in dem Gewindezapfen (2) ausgebildete Längsnut (13) eingreift, wobei zwischen der zweiten Sicherungsscheibe (9) und der Beilagscheibe (7") eine Verdrehsicherung vorgesehen ist.

8. Schraubensicherung nach den voranstehenden Ansprüchen 5, **dadurch gekennzeichnet, dass** der Gewindezapfen (2) der am Ende einer Kolbenstange (1) eines Stoßdämpfers ausgebildete Kolbenstangenzapfen ist.
